# EUROPEAN PATENT APPLICATION

(11) **EP 0 529 725 A1**
(43) Date of publication of application: **03.03.1993**
(21) Application number: 92202566.3
(22) Date of filing: 21.08.1992
(51) Int. Cl.: A01G 9/14, E04D 3/28

(54) **Glasshouse**

(30) Priority: 26.08.1991 NL 9101442
(71) Applicant: BOAL BEHEER B.V., NL-2678 AC De Lier (NL)
(72) Inventor: van der Kooy, Abraham Paulus, NL-2635 GE Den Hoorn (NL); van Holsteijn, Gerardus Jacobus Maria, NL-2291 CC Wateringen (NL)
(74) Representative: Konings, Lucien Marie Cornelis Joseph

(57) **Abstract**

The invention relates to a glasshouse (1) for cultivating vegetables, fruit and/or flowers comprising:
walls (2,3),
pillars (4),
gutters (5) mutually connecting the pillars (4),
connecting elements (6,7), for instance trusses (6), oriented transversely of the gutters and mutually connecting the pillars,
roof portions (7) arranged between the gutters and comprising ridge profiles (8),
wherein series of glass panels (10) arranged in the walls and the roof portions bound cultivation space of the glasshouse.

The invention has for its object to improve the light incidence into a glasshouse and therewith improve its cultivation yield of vegetables, fruit and/or flowers. To this end the glasshouse according to the invention has the feature that glass panels of at least one series bounding cultivation space connect mutually without interposing of support bars and form glass profiles having a profile other than that of a flat plate.

## Description

The invention relates to a glasshouse for cultivating vegetables, fruit and/or flowers comprising:
- walls,
- pillars,
- gutters mutually connecting the pillars,
- connecting elements, for instance trusses, oriented transversely of the gutters and mutually connecting the pillars,
- and roof portions arranged between the gutters and comprising ridge profiles,

wherein series of glass panels arranged in the walls and the roof portions bound cultivation space of the glasshouse.

Such a glasshouse is universally known and is constructed from prefabricated elements which fit together as a construction method. Glass plates are herein received in and supported by support bars which, as part of the glasshouse frame, have an essential reinforcing function. In a glasshouse the light incidence is of essential importance since the more light that enters the glasshouse, the greater the cultivation yield of vegetables, fruit and/or flowers will be. Continuous attempts have therefore been made to make the profiles of the diverse construction elements narrow - while preserving sufficient rigidity - and to take account of light incidence in selecting their design, this so that the light excluded by the diverse construction elements is reduced. In this respect various construction elements including support bars are designed as aluminium tube profiles. NL-A-8700607 is an example of a design of tubular support bars aimed at gaining light.

Attempts have further been made to find the optimum glass plate thickness so that, on the one hand, for the lowest possible cost price the glass plate is as light transparent as possible at the smallest possible thickness and, on the other, the glass plate is sufficiently thick to span a considerable distance between support bars, taking account of the danger of breakage in the case of hail.

The invention has for its object to improve the light incidence into a glasshouse and therewith improve its cultivation yield of vegetables, fruit and/or flowers. To this end the glasshouse according to the invention has the feature that glass panels of at least one series bounding cultivation space connect mutually without interposing of support bars and form glass profiles having a profile other than that of a flat plate.

The glass profiles are self-supporting so that they do not require support bars. The absence of support bars between glass profiles entails much light gain and a significant material saving. While it is true that glass profiles obstruct a little more light than flat glass plates, are per se more difficult to manufacture, seem to be more difficult to incorporate and even do not fit at all into existing glasshouse construction systems, the use of glass profiles in glasshouses nevertheless results in surprising advantages.

The absence of support bars means an enormous material saving and - what is more important - a light gain which many times exceeds the light loss resulting from the poorer light permeability of the glass profiles. The glass profiles are self-supporting such that they can bridge a considerable span. The omission of a purlin or possibly even two purlins again means a significant material saving and light gain. In a so-called wide roof glasshouse - this is a glasshouse with trusses oriented at an incline between gutters and ridges - the said additional advantage of omitting the purlins can be gained. In a so-called Venlo-type glasshouse - this is a glasshouse with horizontal cross connections or trusses arranged between gutters and having as it were a floating ridge - an extra advantage can be obtained with a greater gutter pitch distance. The number of gutters and pillars is then hereby reduced, which again per se signifies material saving and further light gain.

it is noted that glass profiles are per se generally known and are used in the building industry, for instance in frontages to office buildings and in roofs of factory buildings or garages. To provide documentation hereof reference is made to the brochure "Reglit (R) Profilbauglass mit System" from Bauglasindustrie GmbH, D-6612 Schmelz/Saar, Glashüttenstrasse 1.

Further known, for instance from a brochure "SedoIsolierscheibe"(R), is the use of glass panels in a glasshouse, wherein two glass cups of U-shaped section are mutually connected on their edges by means of a heat weld so that a hollow, closed glass box construction is obtained. These panels are used for realizing a thermal insulation to save fuel. These panels are built into a glasshouse with the use of support bars so that their own large bearing capacity is not utilized. While the thermal insulation of said panels is better, they have the drawback of a poor light permeability.

Known from NL-A-7900246 is a glasshouse comprising box-like panels blown from glass which join together with a tongue and groove joint without interposing of bars. These box-like panels have a short length in the profile direction of their connecting sides so that their large resistance moment against bending is not utilized. In addition their light permeability is poor.

EP-A-0342886 describes a glasshouse with U-shaped panels consisting of multiple layers of transparent plastic which bound hollow insulating spaces. These panels are advantageous with a view to energy saving but the light permeability of these panels is poor. In this publication the use of U-shaped glass panels forming insulating box constructions laid on one another in pairs is considered disadvantageous because of the great weight and high price of such box constructions.

NL-A-8702539 proposes manufacturing the gutters of bent or U-shaped glass profile. These glass profiles then extend transversely on support bars. This publication proposes to support a combination of flat and profiled glass panels using glass support bars. Because the glass panels and the support bars form separate elements the material of the glass panels makes no or hardly any contribution to effecting the required bending strength in the direction transversely of the ridge beams. The inventor of this known proposal evidently understood that the required bending resistance was difficult to bring about with the glass support bars. He therefore proposes in his patent application to support the ridge beams instead of the gutters with pillars. This results in an unusual construction of the glasshouse which, on account of diverse practical drawbacks, will perhaps not find its way onto the market but which does in itself have the advantage that the support bars are mainly tensile loaded and are hardly exposed to the danger of bending and/or breaking. In contrast to mutually separating light transparent panels and support bars it is proposed according to the invention to employ glass profiles combining the function of light transparent panel and the function of support bars such that all the material of a single profile is utilized for bringing about an adequate resistance moment against bending in order to bridge a considerable span.

Mentioned and other features and advantages of the invention will be elucidated in the description following hereinbelow which shows only by way of example a number of embodiment variants of a glasshouse according to the invention with reference to drawings, in which:
Figures 1, 26 and 29 each show a perspective view of in each case a different preferred embodiment of a glasshouse according to the invention;
Figure 2 shows on a larger scale a broken away perspective section along the line II-II in figure 1;
Figure 3 shows on a larger scale a perspective view according to arrows III in figure 1;
Figure 4 shows a head end view of glass profiles used in the glasshouses of figures 1, 26 and 29;
Figures 5 and 7 show on a larger scale head end views of variants of detail V in figure 4;
Figures 6 and 8 are perspective views of as yet unmounted pieces of sealing strip used in figure 5 and figure 7 respectively;
Figure 9 shows on a larger scale a perspective view of yet another variant of detail V in figure 4;
Figures 10-22 show head end views of diverse variants of glass profiles which can be used in a glasshouse according to the invention;
Figure 23 is a broken away perspective view of a detail of a glasshouse according to the invention with the use of glass profiles of figure 22;
Figures 24 and 25 show on a larger scale respectively a broken away perspective view of detail XXIV in figure 1 and detail XXV in figure 24;
Figure 27 shows on a larger scale a perspective view according to arrows XXVII in figure 26;
Figure 28 shows on a larger scale detail XXVIII of figure 27;
Figure 30 shows on a larger scale a perspective view according to arrows XXX in figure 29;
Figure 31 is a section of a fraction of another glasshouse according to the invention;
Figure 32 shows a perspective view of a fraction of a glasshouse with the use of gutter profiles according to figure 22.

Diverse components with the same function are designated with identical reference numerals, even when their design differs in various figures.

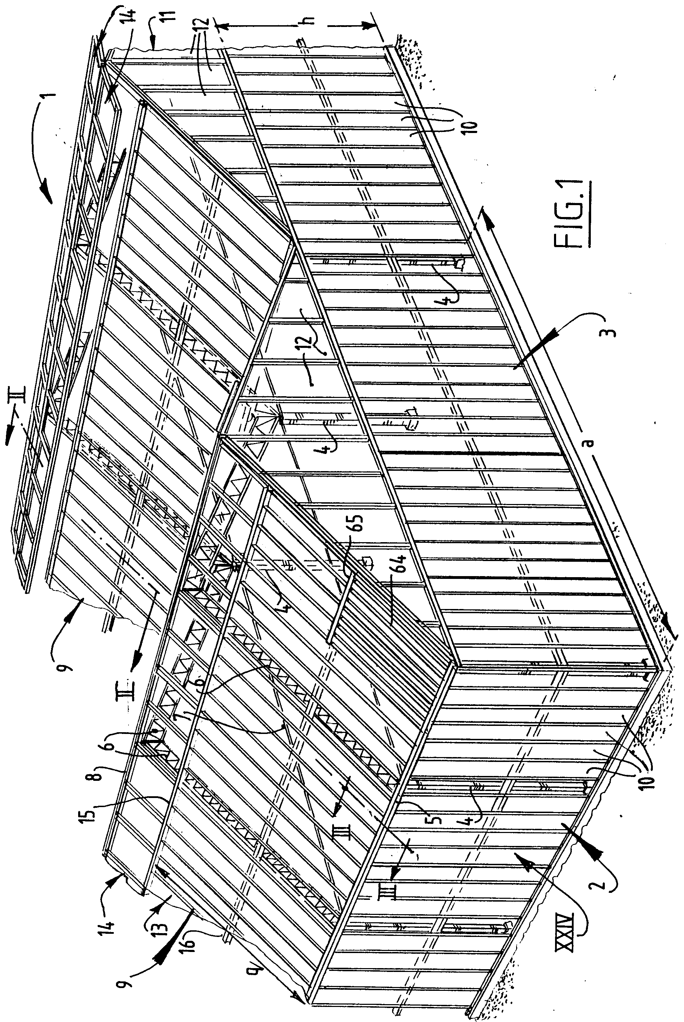

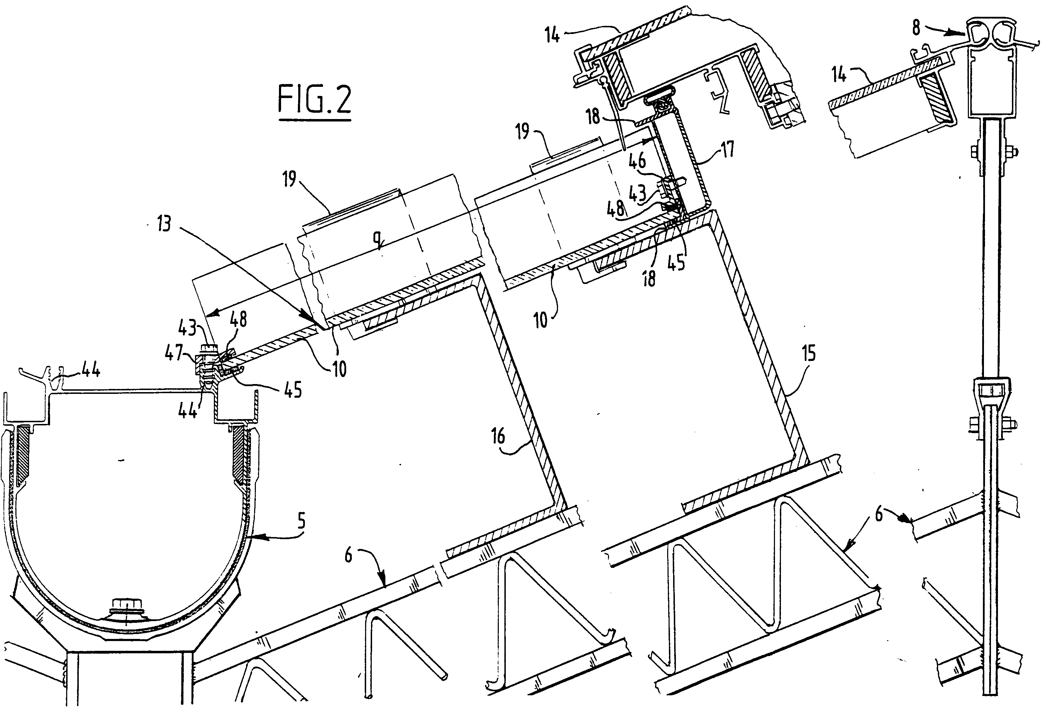

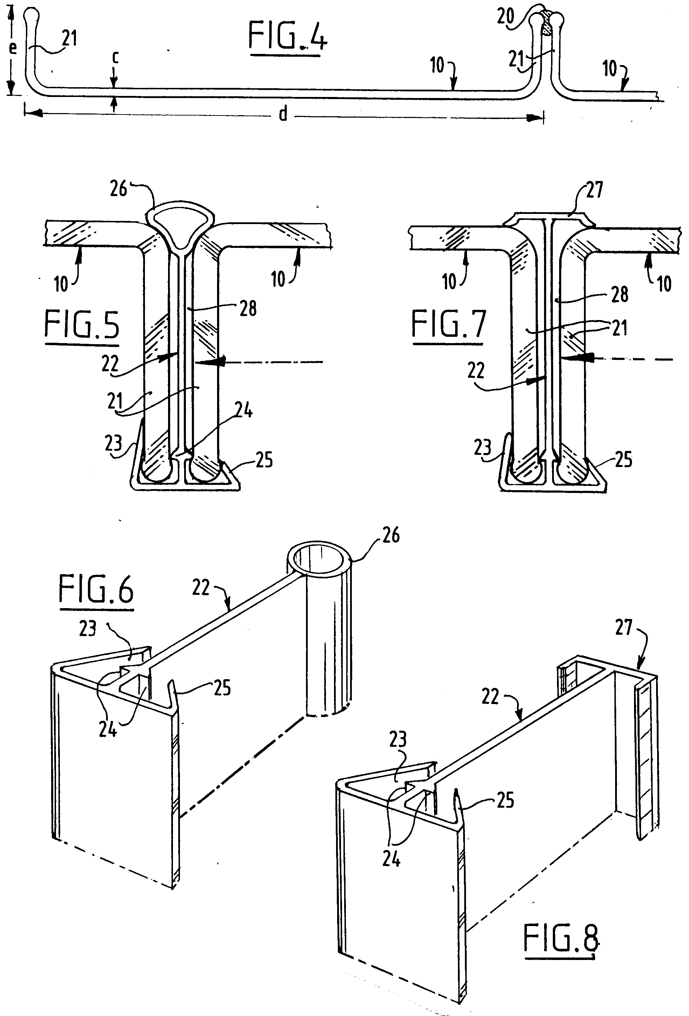

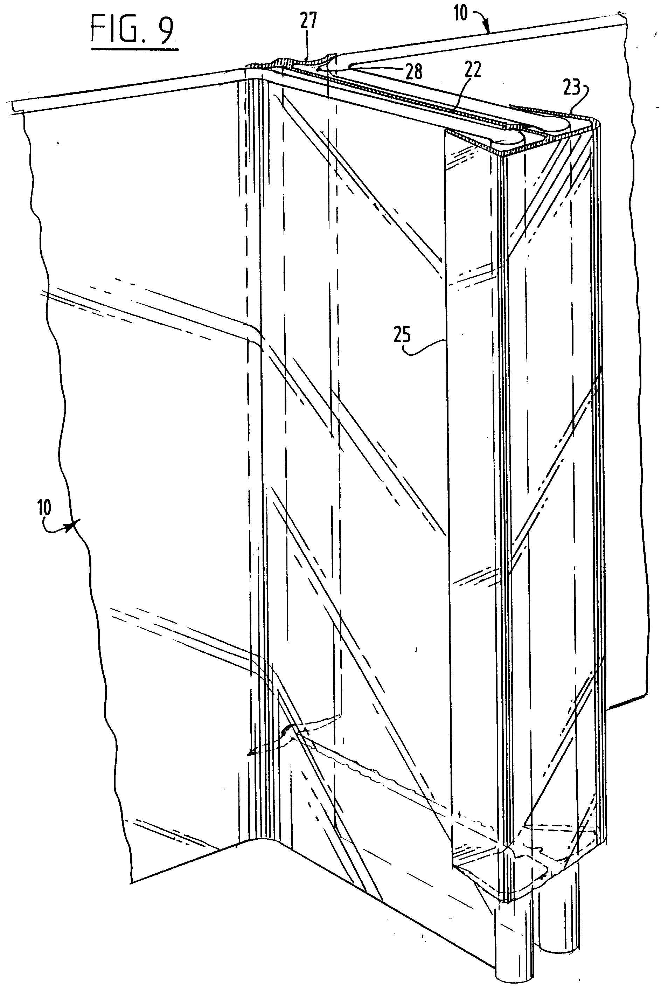

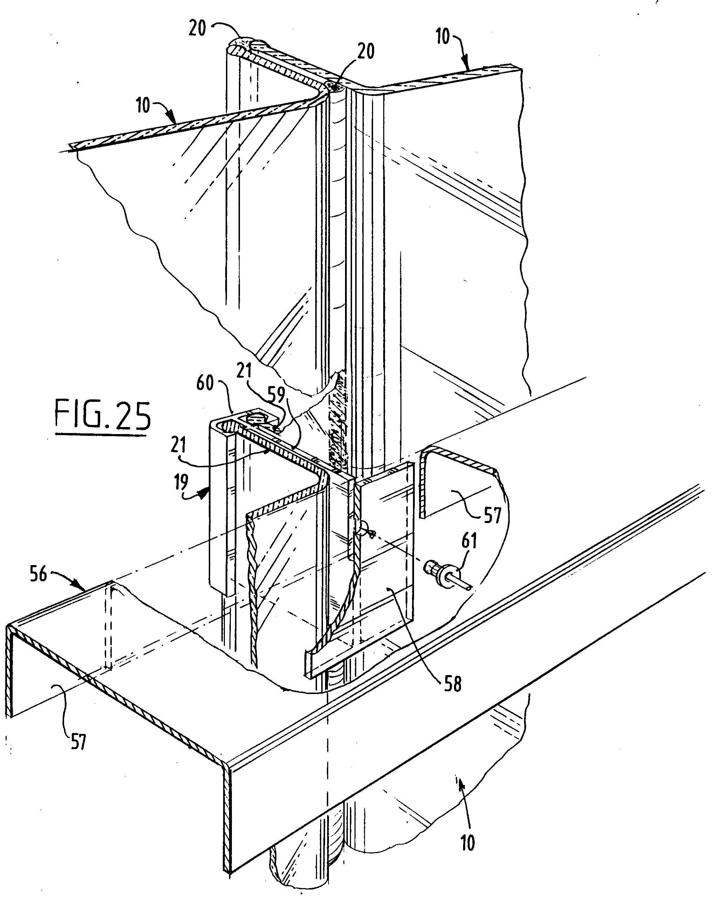

The glasshouse 1 of figure 1 is a so-called wide roof glasshouse and comprises side walls 2, end walls 3, pillars 4, gutters 5 mutually connecting the pillars 4, roof portions 9 arranged between the gutters 5 and comprising ridge profiles 8, and comprises connecting elements oriented transversely of the gutters 5 and mutually connecting the pillars 4, which elements consist of trusses 6 directed inclining upward from the gutters 5 and horizontal rods 7. Arranged in the walls 2 and 3 are glass panels which bound the cultivation area of the glasshouse 1. According to the invention at least one series of these glass panels is embodied as glass profiles 10. Hereby understood is a glass panel having a profile other than that of a flat plate. In preference practically all glass panels of the side walls 2 and all glass panels of the end walls 3 below the level of the gutters 5 are embodied as glass profile 10. In the ridge triangles 11 of the end walls 3 the glass panels consist for example of flat glass plates 12. The culture area of the glasshouse 1 can optionally be divided by per se known screens (not drawn) into warm areas and isolation areas bounded by the glass profiles 10. The trusses 6 oriented substantially parallel to the roof portion surfaces 13 bear a ridge profile 8, an upper purlin 15 and a lower purlin 16 (see figure 2). Windows 14 comprising flat glass plates are arranged hingeably on the ridge profile 8 and extend as far as the purlin 15 where they close sealingly on a window edge profile 17 which is carried by the purlin 15 and has two flanges 18 facing toward the gutter 5 between which U-shaped glass profiles 10 are held. Series of glass profiles 10 extend from the gutters 5 over lower purlins 16 as far as upper purlins 15 along a length q of 5.5 m and are anchored to the purlins 16 by means of anchors 19 substantially as shown in figure 25. The glass profiles 10 of the same series can connect to each other mutually sealed as according to figure 4 by means of transparent mastic 20 or by means of transparent sealing strips 22 of figure 6 or 8, as these are shown in the fitted form in respectively figure 5 and 7. The glass profiles 10 are laid connecting together with their outward facing flanges 21, while a sealing strip 22 is clamped beforehand round a flange 21 by means of its long lip 23 and its clamping rib 24. A flange 21 of a subsequent glass profile 10 is then later hooked between a clamping rib 24 and a short lip 25, wherein a hose-like sealing piece 26 (figures 5, 6) or a T-shaped sealing piece 27 (figures 7, 8, 9) seals the join 28.

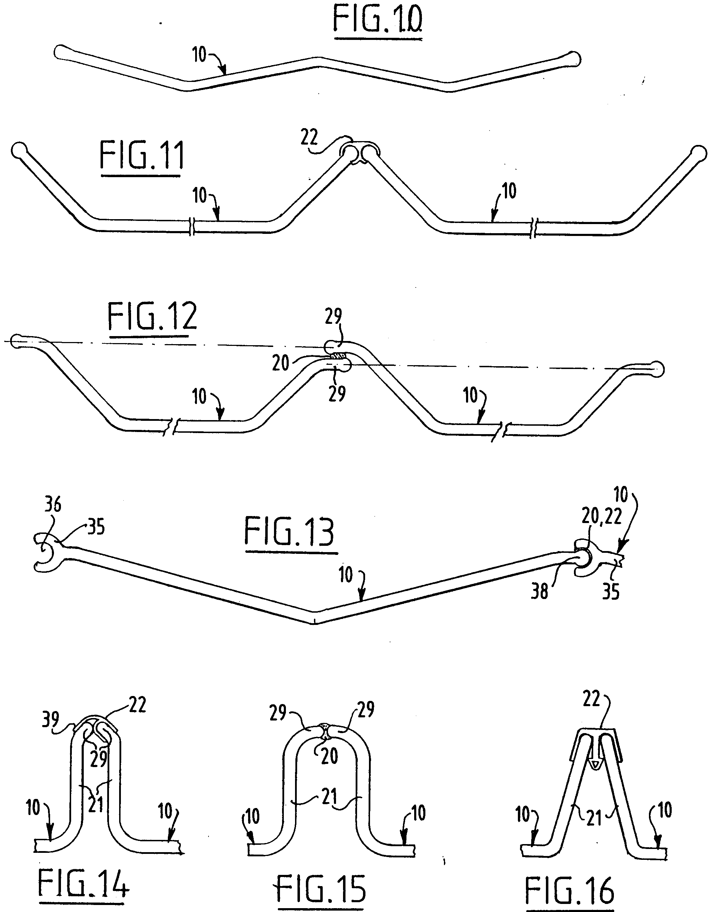

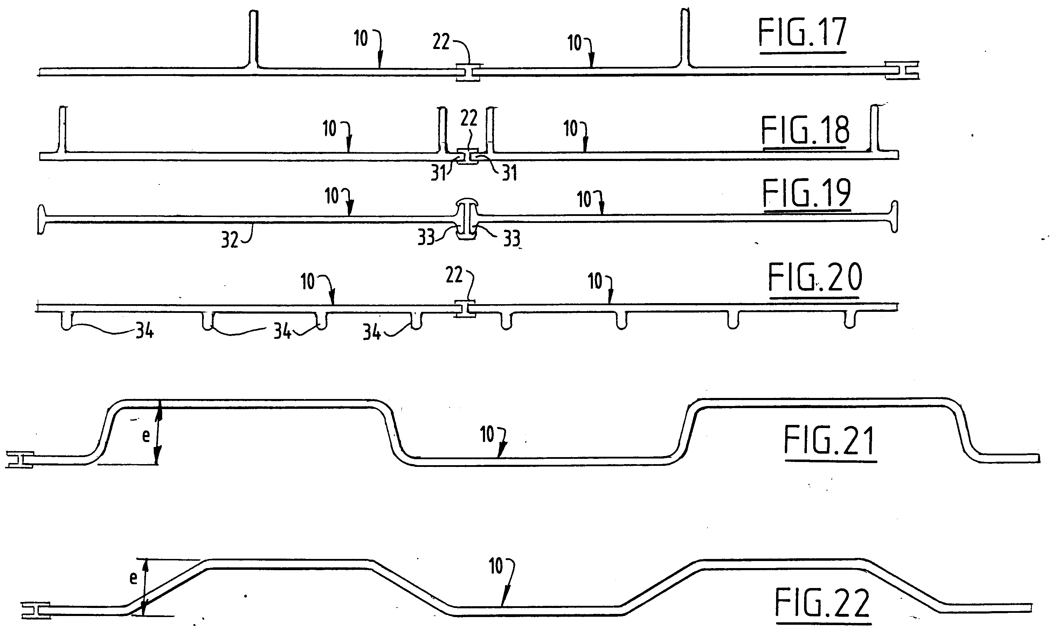

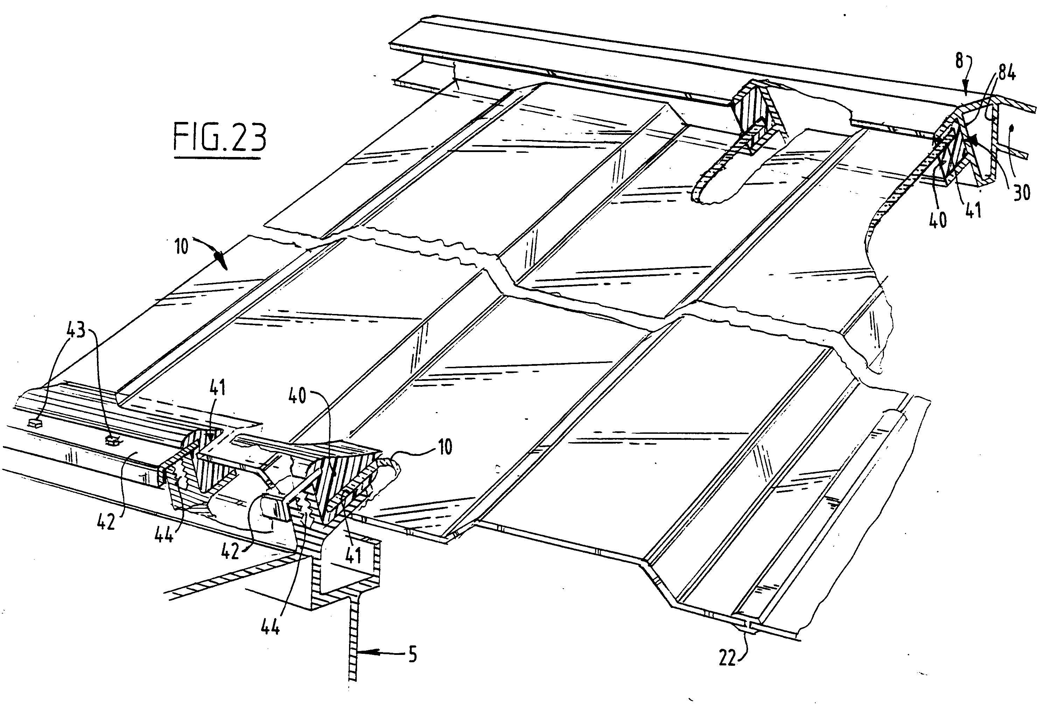

All sorts of profile shapes are conceivable instead of the U-shaped glass profiles 10 of figure 4, for instance a W-shape as in figure 10, a gutter shape in figure 11 or 12, a V-shape of figure 13, a U-shape with outward bent edges 29 of figure 14 or 15 or with flanges 21 oriented sloping outward as in figure 16, a T-shape of figure 17, a U-shape with horizontal connecting edges 31 of figure 18, an I-shape having connecting flanges 33 oriented transversely of a body 32 as in figure 19, a plate form with a plurality of stiffening ribs 34 as according to figure 20 or a meander shape of figure 21 or 22.

With the asymmetrical gutter shape of figure 12 the glass profiles 10 can mutually overlap with their edges 29, preferably with interposed transparent mastic 20 or transparent sealing strip 22. The sealing strips 22 of figure 14 grip clampingly round an edge 29 of a glass profile 10 and have a lip 39 gripping over an adjoining edge 29. The sealing strip 22 of figure 16 clamps round both flanges 21 of adjoining glass profiles 10. The sealing strips 22 of figures 17, 18 and 20-22 are H-shaped and have a good light permeability due to a small height. They also transfer forces acting perpendicularly of the plane of the panels from the one glass profile 10 to the other glass profile 10 disposed adjacent thereto. The glass profiles 10 of figure 13 have a first edge 35 with a channel 36 for receiving a second edge 38 of an adjoining glass profile 10, optionally with interposing of mastic 20 or a sealing strip 22. This mutual connection of glass profiles 10 is force transmitting perpendicularly of the plane bounding the cultivation area. Uneven snow and wind loads or the like can thus be absorbed collectively by adjoining glass profiles.

The glass profiles 10 of figures 21 and 22 are nestable. They moreover have a great moment of resistance so that they can bridge an extra large span or can have a small height e. According to figure 23 the ridge profiles 8 are tubular aluminium profiles having downward diverging side walls 84 which have channels 30 on either side for receiving glass profiles 10. To be seen here are the sealing closure of the glass profiles 10 of figure 22 in the ridge profile 8 and on the gutter 5 by means of sealing strips 40 each having a recess 41 adapted to the meander shape of the glass profiles 10. A clamping frame 42 clamps the glass profile 10 with sealing strip 40 fixedly to the gutter 5 by means of self-tapping bolts 43 which engage in a screw channel 44.

In the case U-shaped glass profiles 10 are used they are sealed as according to figure 2 by means of angular sealing strips 45 and are fastened to the window edge profile 17 and the gutter 5 with clamp frames 46 and 47 respectively and bolts 43 with interposing of elastic strips 48.

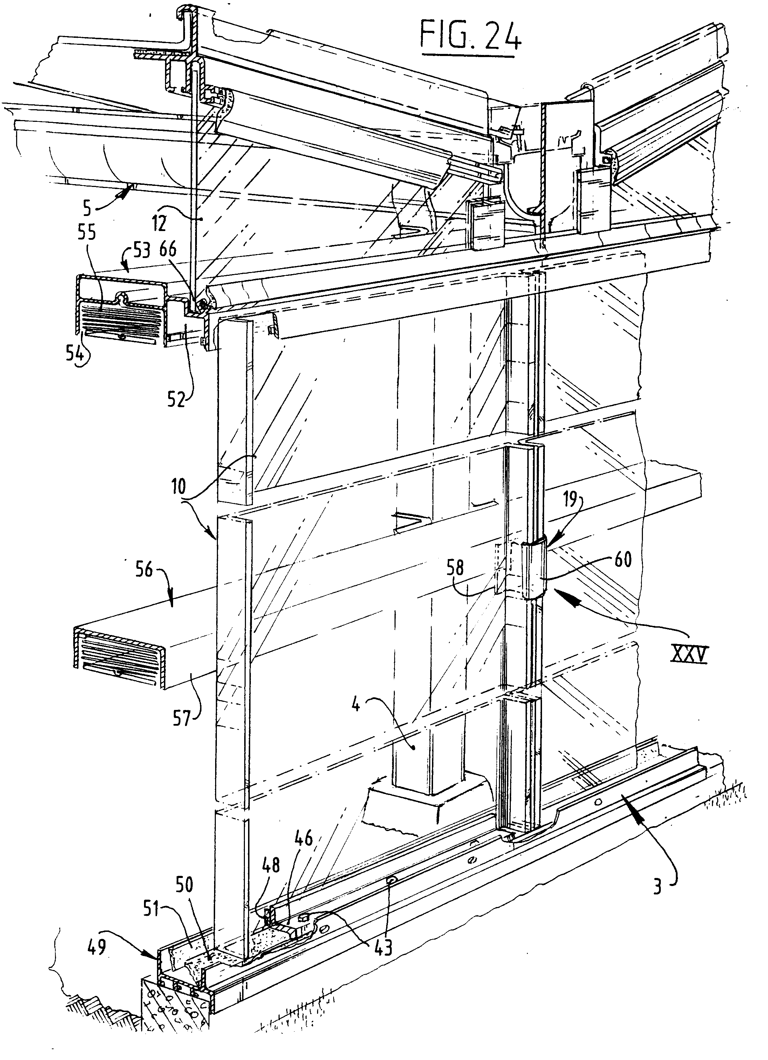

According to figure 24 the end wall 3 comprises standing U-shaped glass profiles 10 which are held at their bottom ends in a U-profile 49 with interposing of sealing strips 50, 51. At their top ends they are held in a channel 52 of a tubular aluminium upper purlin 53 which moreover has a channel 54 for receiving a folded-up blind 55 as well as a recess 66 for glass plates 12. The glass profiles 10 are fixed both at their bottom ends and their top ends by means of clamping frames 46 and screw bolts 43. The glass profiles 10 are further fixed to only one purlin 56 by means of anchors 19 (figure 25) consisting of a foot 58 engaging behind a flange 57 of a U-shaped purlin 56, a body 59 extending between adjoining glass profiles 10 and an anchor head 60 gripping round both flanges 21. The foot 58 is fixed by means of a pop rivet 61 to the flange 57 of purlin 56.

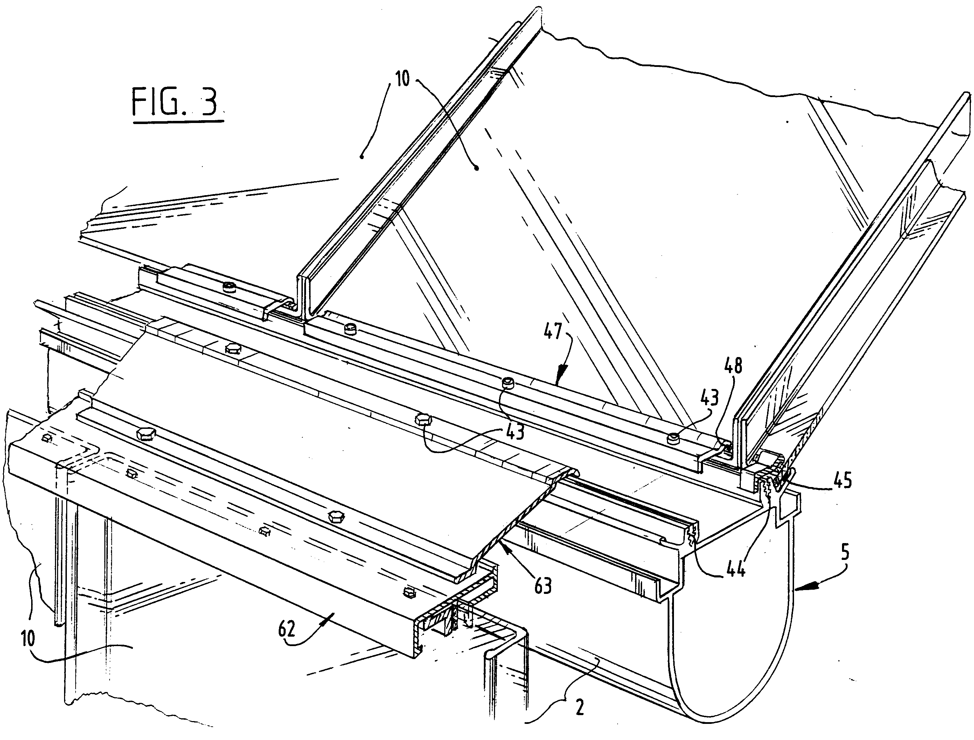

Figure 3 shows the connection of a side wall 3 to a gutter 5 by means of a cover profile 62 and a bridging profile 63.

The wide roof glasshouse of figure 1 has a roof width a of 12.8 m, of this order of magnitude or preferably even more. The gutter height and therewith the length h of the glass profiles 10 in their profile direction amounts to 5.5 m or this order of magnitude. The U-shaped glass profiles 10 which are used in the glasshouse 1 of figure 1 have a wall thickness c of for example 6 or 7 mm, a width d in the order of magnitude of 200 to 500 mm and a height e in the order of magnitude of 40 to 60 mm. Due to the stiffness of the glass profiles 10 a reinforcement against storm damage only has to be arranged on the roof corners 64. This reinforcement may consist of shorter glass profiles 10 with an intermediate connection 65 and/or of glass profiles 10 of smaller width, whereby more reinforcing flanges 21 are present at that location.

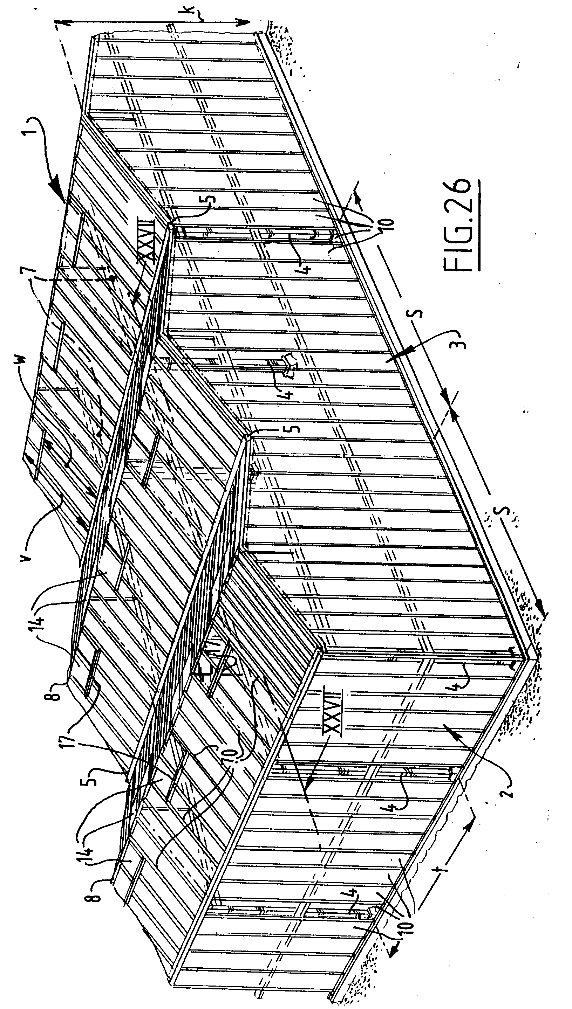

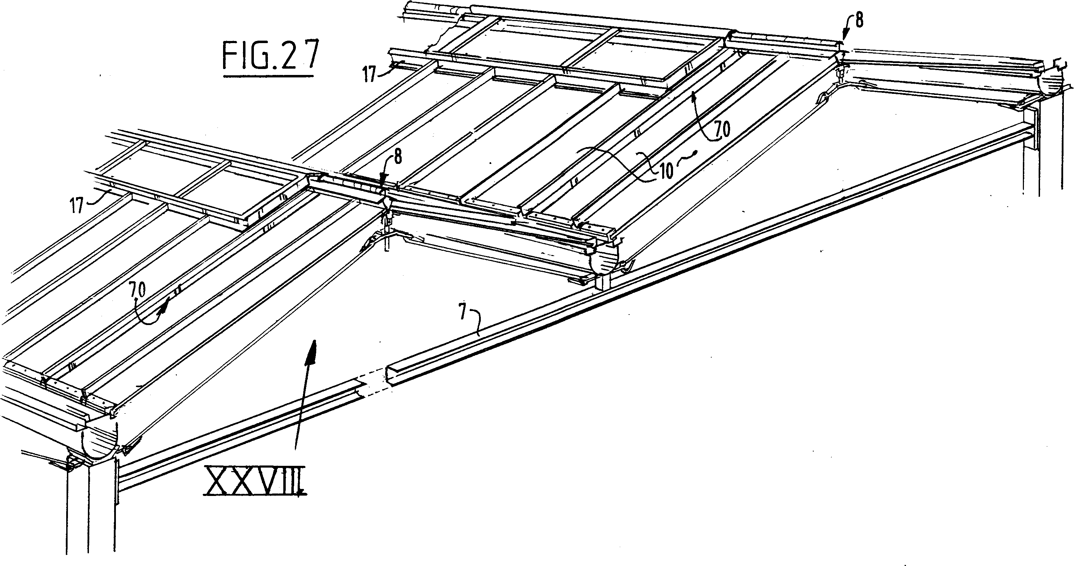

The glasshouse 1 of figure 26 is of the Venlo glasshouse type. Herein pillars 4 are mutually connected by means of gutter 5 and connecting elements 7 formed by metal U-profiles and directed transversely of the gutters 5 (fig. 27). The side walls 2 as well as the end walls 3 comprise standing glass profiles 10 which bound the cultivation area and run in their profile direction up to the roof portions 29 along a length r of 3.5 m or more. The glass profiles 10 which are made of normal glass can easily be cut obliquely with simple glass cutting tools. In the end walls 3 the glass profiles 10 reach to a height k in the order of magnitude of 8 m.

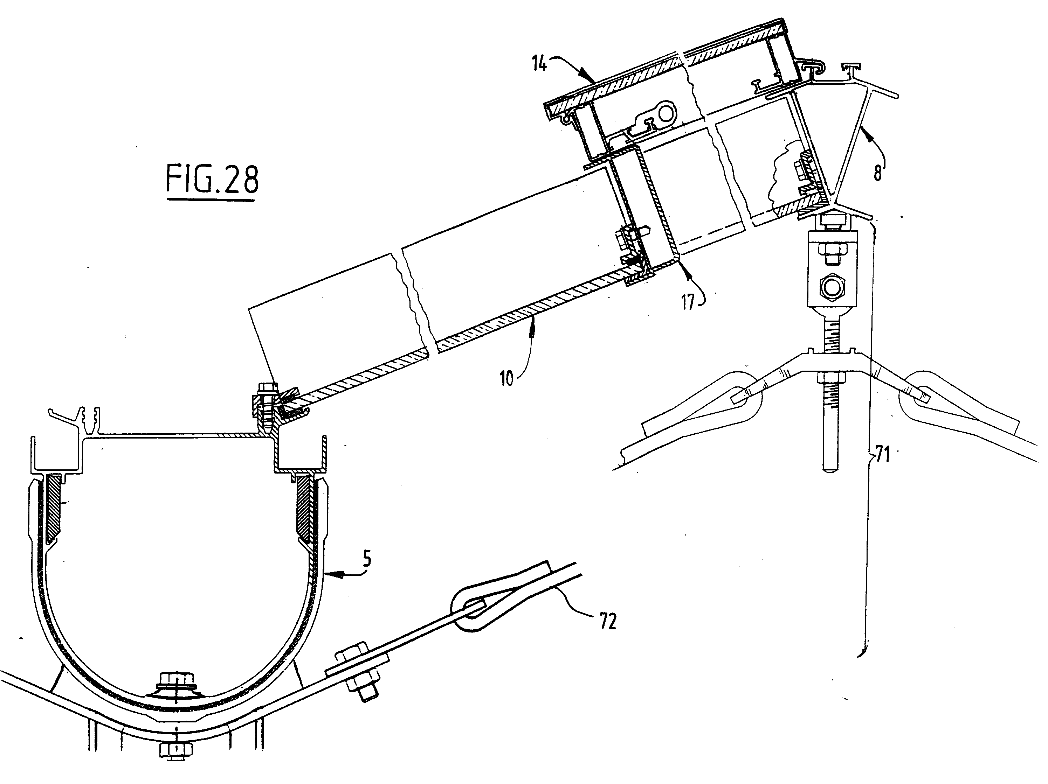

The roof width s amounts for example to 6.4 m and the pillar distance t to 4.8 m. The applied glass profiles 10 have for instance the shape and dimensions designated in figure 4 or have another configuration. They extend from the gutter 5 to the ridge profile 8 or to the window edge profile 17 along a length v of 3.8 m, respectively along a length w of 3.2 m. By way of exception, support bars 70 supporting a window edge profile 17 are present on the sides of the windows 14. Here in each case are series of three glass profiles 10 which mutually connect without interposing of support bars 70. According to figure 28 the ridge profile 8 is connected from place to place to the gutter 5 by means of adjustable pulling means 71. The glass profiles 10, optionally in combination with several support bars 70, hold the ridge profile 8 at a determined distance from the gutter 5 in the manner of pressure elements, while the pulling means 71, which for instance comprise cables 72, prevent the ridge profile 8 moving upward through wind suction.

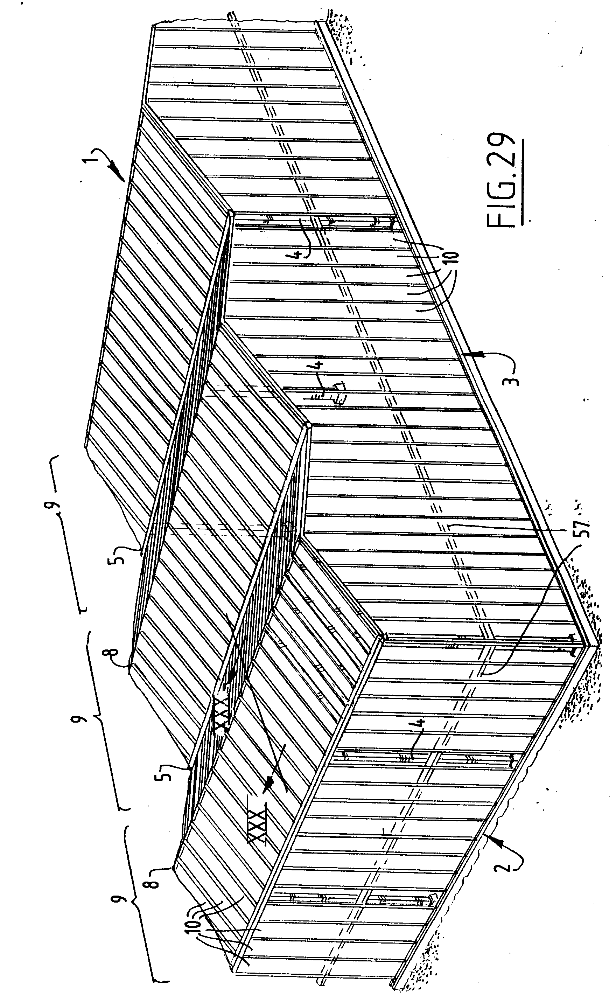

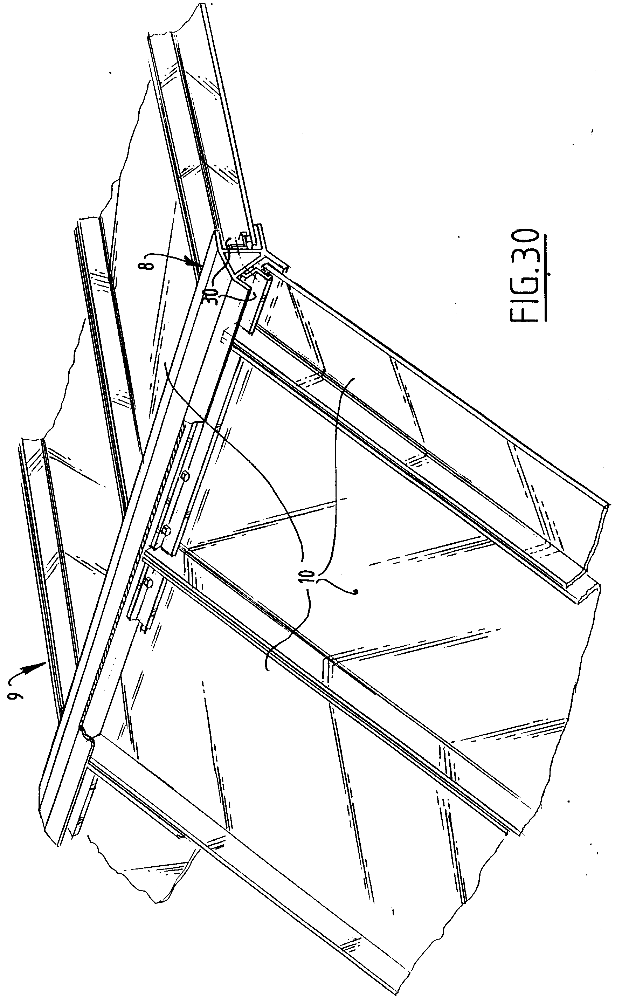

The glasshouse 1 of figure 29 is of the Venlo glasshouse type and has windowless roof portions 9. An air installation (not drawn) is for instance present. In this case the ridge profile 8 according to figure 30 is supported - with the exception of its ends at the end walls 3 - by the pressure loaded glass profiles 10 and pulling means 71.

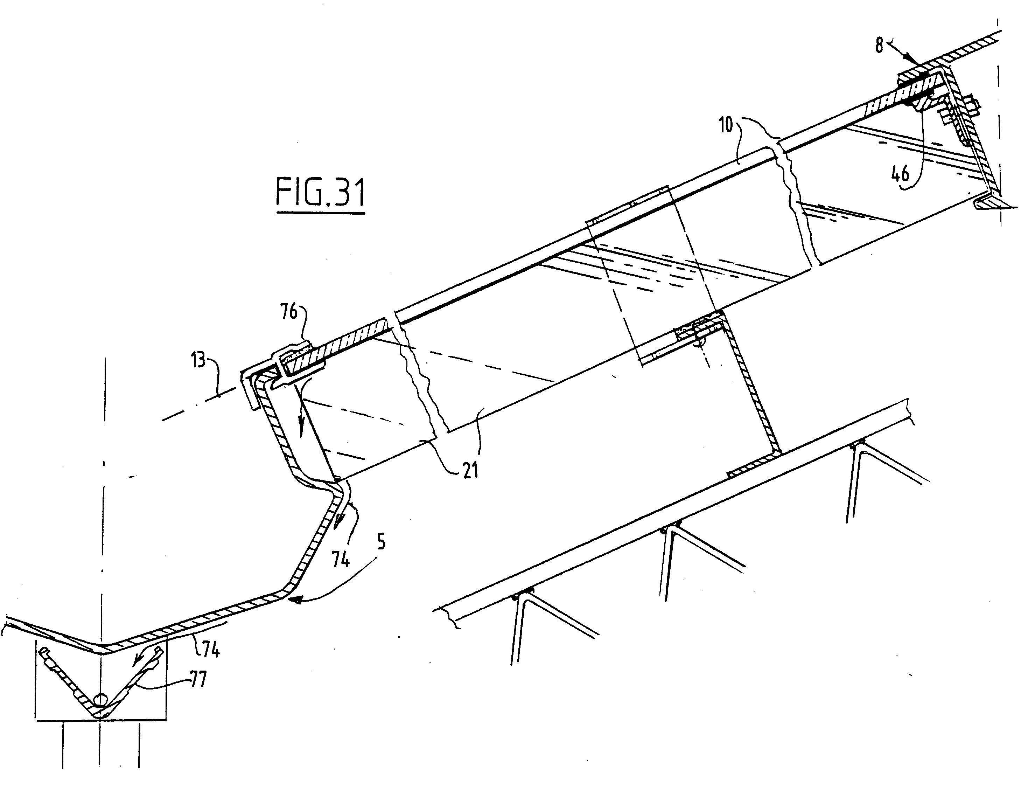

It is also possible to arrange the U-shaped glass profiles 10 with their flanges 21 facing inward in the roof planes 13 and/or in the wall planes. In figure 31 this is shown in combination with a steel gutter 5 and an adapted connection to a ridge profile 8 with a clamping frame 46 and an adapted gutter edge strip 76. The dripping condensed water then runs according to arrows 74 from the flanges 21 along the outside of gutter 5 into a condensation gutter 77.

The length of the glass profiles 10 in their profile direction amounts preferably to at least 1.65 m, this particularly in the case of a Venlo-type glasshouse, more preferably to at least 2 m and even more preferably to at least 2.5 m and, most preferred, even 3 m or more, wherein the lengths of more than 2 m can be considered particularly suitable in the case of a wide roof glasshouse. The glass profiles 10 pass over the purlin 16 preferably as a continuous length. It is however possible that the glass profiles 10 are interrupted at the position of the purlins and are received in profiles supporting on the purlins or in the purlins themselves.

The glass profiles are single-walled and are intended for single glazing, that is, the light has only to enter and leave glass substantially once. The glass profiles 10 can be manufactured from all types of glass, including hardened glass, but preferably from normal glass which can be manufactured at a considerably lower cost price. The glass profiles 10 preferably consist of single glass and are preferably manufactured according to an extrusion and/or rolling process.

The glass profiles 10 can optionally have on both ends an end edge which for instance in figures 4 and 10-22 extends substantially in the drawing plane, this such that a kind of flat glass tray is formed. These end edges strengthen particularly the corners of the profiles and also simplify the sealing on the ends of the glass profiles 10.

## Claims

1. Glasshouse (1) for cultivating vegetables, fruit and/or flowers comprising:
- walls (2, 3),
- pillars (4),
- gutters (5) mutually connecting the pillars (4),
- connecting elements (6, 7), for instance trusses (6), oriented transversely of the gutters (5) and mutually connecting the pillars (4),
- and roof portions (7) arranged between the gutters (5) and comprising ridge profiles (8),
wherein series of glass panels (10) arranged in the walls (2, 3) and the roof portions (9) bound a cultivation area of the glasshouse (1), **characterized in that** glass panels of at least one series bounding cultivation space connect mutually without interposing of support bars and form glass profiles (10) having a profile other than that of a flat plate.

2. Glasshouse (1) as claimed in claim 1, **characterized in that** the glass profiles (10) are single-walled and are arranged as single glazing.

3. Glasshouse (1) as claimed in claim 1 or 2, **characterized in that** the glass profiles (10) have substantially a U-profile.

4. Glasshouse (1) as claimed in claim 1 or 2, **characterized in that** the glass profiles (10) have substantially a V-profile and/or substantially a W-profile.

5. Glasshouse (1) as claimed in claim 1 or 2, **characterized in that** the glass profiles (10) have substantially a gutter-shaped profile with outward oriented edges (29).

6. Glasshouse (1) as claimed in claim 1 or 2, **characterized in that** the glass profiles (10) are mutually nestable and preferably have a mutually nestable meander-shaped profile.

7. Glasshouse (1) as claimed in any of the foregoing claims, **characterized in that** the glass profiles (10) lie over one another with their edges (29).

8. Glasshouse (1) as claimed in any of the foregoing claims, **characterized in that** the glass profiles (10) are mutually connected by means of transparent sealing means (20, 22), for instance by means of sealing strips (22) of transparent plastic.

9. Glasshouse (1) as claimed in any of the foregoing claims, **characterized in that** the glass profiles (10) are mutually engaging, for instance in that the glass profiles (10) have a first edge (35) with at least one channel (36) for receiving a second edge (38) of an adjoining glass profile (10).

10. Glasshouse (1) as claimed in any of the foregoing claims, **characterized by** at least one roof portion (9) with trusses (6) oriented inclining upward substantially parallel to roof planes (13), wherein in each roof plane (13) the trusses (6) support two purlins (15, 16) and a ridge profile (8), wherein between the highest purlin (15) and the ridge profile (8) windows (14) are present and wherein glass profiles (10) extend upward from a gutter (5) over the lower purlin (16) to the upper purlin (15).

11. Glasshouse (1) as claimed in any of the foregoing claims, **characterized in that** at least one end wall (3) has glass profiles (10) to below the level of the gutters (5) and flat glass plates (12) in each ridge triangle (11) present thereabove.

12. Glasshouse (1) as claimed in any of the foregoing claims, **characterized in that** at least one wall comprises at least one aluminium profile (53) which has a channel (52) for receiving ends of glass profiles (10) and a channel (54) for receiving a blind (55).

13. Glasshouse (1) as claimed in any of the foregoing claims, **characterized in that** at least one gutter profile is provided on either side with receiving means (44, 48) for receiving the ends of glass profiles (10).

14. Glasshouse (1) as claimed in any of the foregoing claims, **characterized in that** at least one window edge profile (17) is provided with a channel for receiving glass profiles (10).

15. Glasshouse (1) as claimed in any of the foregoing claims, **characterized in that** the glass profiles (10) are fixed to construction elements (16, 56) of the glasshouse (1) by means of anchors (19).

16. Glasshouse (1) as claimed in any of the foregoing claims, **characterized by** at least one ridge profile (8) having on either side channels for receiving glass profiles.

17. Glasshouse (1) as claimed in any of the foregoing claims, **characterized by** at least one ridge profile (8) consisting of an aluminium tube profile with downward divergent side walls (64) which bound channels (30) for receiving glass profiles (10).

18. Glasshouse (1) as claimed in any of the foregoing claims, **characterized in that** glass profiles (10) are arranged with their protruding flanges (21) facing outward.

19. Glasshouse (1) as claimed in any of the foregoing claims, **characterized in that** the glass profiles (10) have in their profile direction a length of at least 1.65 m, preferably a length of at least 2 m and still more preferably a length of at least 3 m.
